# EUROPEAN PATENT APPLICATION

(11) **EP 1 734 006 A1**
(43) Date of publication of application: **20.12.2006**
(21) Application number: 05720638.5
(22) Date of filing: 11.03.2005
(51) Int. Cl.: C01G 35/00, C01G 33/00

(54) **METHOD FOR PRODUCING TANTALUM OXIDE AND/OR NIOBIUM OXIDE IN FORM OF HOLLOW PARTICLE**

(30) Priority: 11.03.2004 JP 2004068313
(71) Applicant: Stella Chemifa Corporation, Osaka-shi, Osaka 541-0047 (JP)
(72) Inventor: KIKUYAMA, Hirohisa, c/o STELLA CHEMIFA CORPORATION, Izumiootsu-shi, Osaka, 5950075 (JP); WAKI, Masahide, c/o STELLA CHEMIFA CORPORATION, Izumiootsu-shi, Osaka, 5950075 (JP); HASHIGUCHI, Shinji, c/o STELLA CHEMIFA CORPORATION, Izumiootsu-shi, Osaka, 5950075 (JP); AOKI, Kenji, c/o STELLA CHEMIFA CORPORATION, Izumiootsu-shi, Osaka, 5950075 (JP)
(74) Representative: Dr. Weitzel & Partner
(86) International application number: PCT/JP2005/004367
(87) International publication number: WO 2005/087668

(57) **Abstract**

The object of the invention is to provide tantalum oxide and/or niobium oxide in the form of hollow particles. Disclosed is a method comprising adding hydrazine or an aqueous solution of hydrazine to (1) an aqueous solution of a tantalum compound and/or a niobium compound, to (2) an aqueous solution of fluorotantalic acid and/or fluoroniobic acid, or to (3) a solution obtained by dissolving crystallized fluorotantalic acid and/or crystallized fluoroniobic acid in water, to produce tantalum hydroxide and/or niobium hydroxide, and firing the tantalum hydroxide and/or niobium hydroxide.

## Description

### TECHNICAL FIELD

The present invention relates to powdery tantalum oxide and/or powdery niobium oxide, and a method for preparing them, for example, to powdery tantalum oxide and/or powdery niobium oxide crystallized in a singular shape to form fine particles having a high purity and high specific surface area which will be used as a suitable material in the fabrication of piezoelectric elements, semiconductors, sensors, optoelectronic devices, dielectric elements, and superconductive elements, and to a method for producing such powdery tantalum oxide and/or powdery niobium oxide.

### BACKGROUND ART

Patent Document 1: Japanese Unexamined Patent Application Publication No. 3-153527
Patent Document 2: Japanese Unexamined Patent Application Publication No. 6-321543
Patent Document 3: Japanese Unexamined Patent Application Publication No. 11-255518
Patent Document 4: Japanese Unexamined Patent Application Publication No. 2002-253964
Patent Document 5: Japanese Unexamined Patent Application Publication No. 2000-080346

Recently, there has been an increased demand for tantalum oxide and/or niobium oxide in the fabrication of electronics parts and devices. Particularly, a strong demand is manifest for powdery tantalum oxide and/or powdery niobium oxide whose particle has a small diameter and a high specific surface area, which will serve as a suitable material in the fabrication of optoelectronics devices and catalysts. However, preparation of powdery tantalum oxide and/or powdery niobium oxide conventionally occurs by taking tantalum hydroxide and/or niobium hydroxide as starting materials, and firing and pulverizing them. Thus, the resulting powder comprises particles which are not uniform in size and whose size is comparatively large. Under this current situation, there is an intensified demand for powdery tantalum oxide and/or powdery niobium oxide whose particle has a small diameter and a high specific surface area as described above.

There is also a strengthened demand for a method enabling the control of the crystal shape of a crystal compound, because then it will be possible to confer a functionality that has never been observed heretofore to a product by using as a material a compound having a singular crystal shape in the fabrication of the product.

To meet such demands as described above, particularly for powdery crystals comprising fine particles which have a high specific surface area and diameter, recently techniques have been developed for providing various elements comprised of fine particles in the form of sol. However, these techniques are limited only to the production of such a sol, and do not concern in any way with the subsequent processes, such as drying and firing which are accompanied by the fusion/conglomeration of particles. As the particles of a powdery element become finer, the readier the particles will fuse or conglomerate together when dried or fired. Consequently, the element, after having undergone drying/firing, will consist of particles having a large size, instead of a desired small size.

For the preparation of a niobium material, Patent Document 1(Japanese Unexamined Patent Application Publication No. 3-153527) discloses a technique for developing peroxy niobic acid sol. According to the report of this patent document, it is possible to obtain a niobium containing derivative of ceramics by mixing the peroxy niobic acid sol with a ceramics material, and firing the mixture. Indeed, this technique is improved somewhat over the method comprising mixing a slurry of uneven niobium oxide or niobium hydroxide particles. However, even according to the method in question, it is still difficult to obtain a powdery ceramics material whose particle is fine and uniform in size, because when peroxy niobic acid sol is fired together with other constitutive elements, the particles will vigorously conglomerate together. Moreover, since peroxy niobic acid (H⁺[NbO₂(O)₂]⁻) sol is obtained by treating a material such as niobium hydroxide with a strong acid and aqueous solution of hydrogenperoxide to produce an aqueous solution of peroxy niobic acid, and keeping that solution at 5 to 50°C to turn it into a sol, the sol always carries peroxide therein which may restrict the use of the sol, depending on other coexistent constituents. For example, such peroxides are so reactive with other constitutive materials that they will pose a problem when used as a material in the fabrication of catalysts or optoelectronic devices, so serious as to disable their use in the fabrication of those devices.

Patent Document 2 (Japanese Unexamined Patent Application Publication No. 6-321543) discloses a modified version of the above method based on niobium oxide sol which involves the addition of oxalic acid. Indeed, this method is effective in reducing the size of particles suspended in sol. However, this patent document also does not give any mention about how to cope with the fusion/conglomeration of particles which may occur as a result of subsequent drying and firing.

Patent Document 3 (Japanese Unexamined Patent Application Publication No. 11-255518) discloses a method for producing highly pure tantalum hydroxide and tantalum oxide. According to this patent document, tantalum oxide is actually dried and fired to produce powdery tantalum oxide, and the diameter of the powder particles is actually given. According to the description of this patent document, tantalum oxide subsequent to drying in fact comprises primary particles whose average diameter is 5.0 to 15.0 µm and the same tantalum oxide comprises primary particles with their average diameter being 1.0 to 10.0 µm after it has been fired and pulverized.

However, powdery tantalum oxide and/or niobium oxide recently used in combination with ceramics materials or as a material of electronics parts are required to comprise primary particles which have a very small average diameter and high specific surface area. Specifically, primary particles of powdery tantalum oxide and/or powdery niobium oxide are required to have an average diameter equal to or less than 1 µm and specific surface area equal to or more than 10 m²/g.

As mentioned above, crystal compounds comprised of crystals having a singular shape, particularly hollow particles have attracted attention recently because of their possibility of conferring a new functionality to products to which they are applied. In this connection, two illustrative examples will be described below.

The first example relates to an oxide-based photocatalyst. Since photocatalysts in the form of a powder have been conventionally used, organic compounds partly or entirely cover the surface of each particulate oxide-based photocatalyst, and thus the photocatalytic activity of each particle is markedly reduced, as compared with the activity of corresponding bare particles.
Furthermore, since organic compounds decompose as a result of the activity of photocatalyst, the membrane of particulate photocatalyst will have such an impaired strength that the particles will be ready to escape from a bed, thus reducing the endurance of the photocatalytic device itself. To meet this inconveniency, techniques have been developed for controlling the surface condition of particulate photocatalyst, or for controlling the shape of crystals forming a superficial layer of photocatalyst, in order to thereby maintain the activity of the photocatalyst at a high level. However, those techniques do not necessarily bring about notable improvement in the function of photocatalytic device, and in addition, the processing of substrate/membrane and insertion of an underlying layer will require an extra cost. As a solution to this problem, Patent Document 4(Japanese Unexamined Patent Application Publication No. 2002-253964) reports titanium oxide crystallized in a columnar shape having a central hole in its core, which has a high photocatalytic activity.

The second example relates to inorganic compound-based UV light scattering agents. Although titanium oxide has shielding effect against UV rays whose wavelength corresponds to the UV-B region, it hardly has any shielding effect against UV rays falling in the UV-A region. Further, when a cosmetic agent containing titanium oxide is applied to the face, the face inconveniently comes to have a bluish white tone. In contrast, although zinc oxide is more transparent than titanium oxide, it is not so effective in shielding against UV rays falling in the UV-B region as titanium oxide. To cope with these flaws, various inorganic compound-based UV shielding agents that are improved to be free from the above defects have been proposed. However, even those agents still remain insufficient in their use feeling and safety: they do not readily disperse in solvent and may stimulate the skin as a result of their catalytic action. In response to this, Patent Document 5 (Japanese Unexamined Patent Application Publication No. 2000-080346) reports an oxide or complex oxide in the form of hollow particles, which, when used as a UV shielding agent, makes it possible to reduce the apparent specific gravity of the agent, and thus, when used as a material in the manufacture of paint or dye, or cosmetic agents, markedly improves the dispersibility of the product, as compared with the same product made of a UV shielding agent in the form of conventional solid particles.

As seen from the above examples, with regard to a powdery agent which conventionally exists as solid particles, it is possible to improve its function or to provide it with a new function, by modifying the agent to take the form of hollow particles instead of solid particles, and such crystal agents whose crystal form is modified attract general attention.

Conventional methods for producing powdery titanium oxide comprising hollow particles, fine hollow particles, or ultra-fine hollow particles involve interface reaction, multiple emulsion, spray drying, liquid-in solidification, surface polymerization around core substance, combustion around core substance, coacervation, liquid-in drying, etc., and require processes so complicated that the ready acquisition of such hollow compounds as described above has been difficult.

### DISCLOSURE OF THE INVENTION

### PROBLEM TO BE SOLVED BY THE INVENTION

As seen from above, there is a need for tantalum oxide and/or niobium oxide which can be used as it is, not being restricted in their use, for example, owing to the concomitant existence of other elements, in the form of hollow crystals or primary particles which have a very small average diameter and high specific surface area. There is also a strong demand for a technique enabling the ready formation of such hollow crystals.

Under the current situation as described above as a background, the present inventors had tried hard to obtain tantalum oxide and/or niobium oxide which can be used as a material in various applications and for various purposes, and for this purpose, tried to develop a method for producing tantalum hydroxide/tantalum oxide and/or niobium hydroxide/niobium oxide.

The object of the present invention is to provide tantalum oxide and/or niobium oxide in the form of hollow particles, and a method for producing such tantalum oxide and/or niobium oxide.

### MEANS FOR SOLVING PROBLEM

To achieve the above object, the present inventors studied hard and found that it is possible to obtain tantalum oxide and/or niobium oxide in the form of hollow crystals or primary particles which have a very small average diameter and high specific surface area, by optimizing the condition of neutralization process which is undertaken during the production of tantalum hydroxide and/or niobium hydroxide. They reached the present invention based on this finding.

The present invention relates to a method for preparing tantalum oxide and/or niobium oxide in the form of hollow particles, the method comprising adding hydrazine or an aqueous solution of hydrazine to an aqueous solution of (1) a tantalum compound and/or a niobium compound, (2) fluorotantalic acid and/or fluoroniobic acid, or (3) crystallized fluorotantalic acid and/or crystallized fluoroniobic acid, to produce tantalum hydroxide and/or niobium hydroxide, and firing the tantalum hydroxide and/or niobium hydroxide to produce tantalum oxide and/or niobium oxide in the form of hollow particles.

### EFFECT OF THE INVENTION

According to the present invention, it is possible to obtain tantalum oxide and/or niobium oxide in the form of hollow particles. It is also possible to obtain powdery tantalum oxide and/or niobium oxide comprising particles which have an average diameter equal to or less than 1 µm and specific surface area equal to or more than 10 cm²/g. It may be expected that tantalum oxide and/or niobium oxide in the form of hollow crystals which can be obtained readily by the inventive method, when used as a material in the fabrication of piezoelectric elements, semiconductors, sensors, optoelectronic devices, dielectric elements, or superconductive elements, would confer a novel functionality to those products.

### BRIEF DESCRIPTION OF THE DRAWINGS

Fig. 1 shows an SEM photograph of tantalum oxide and/or niobium oxide produced by an exemplary method.
Fig. 2 shows an SEM photograph of tantalum oxide and/or niobium oxide produced by an exemplary method.
Fig. 3 shows an SEM photograph of tantalum oxide and/or niobium oxide produced by an exemplary method.
Fig. 4 shows an SEM photograph of tantalum oxide and/or niobium oxide produced by an exemplary method.

### BEST MODE FOR CARRYING OUT THE INVENTION

The method of the present invention will be described below sequentially according to the constitutive steps.
Suitable starting materials to be used in the inventive method may include ores such as tantalite and/or columbite, or niokalite, alloys containing tantalum and/or niobium, capacitors made of tantalum and/or niobium, the remains of materials or vapor deposition films containing tantalum and/or niobium, and dusts and scraps left after processing with ultra-hard machining tools. A material composed mainly of tantalum and/or niobium is preferred, but suitable materials for the inventive method are not limited to above.

A starting material may be obtained by melting again a highly pure tantalum oxide and/or niobium oxide material. Alternatively, a starting material may be obtained by subjecting a start solution to extraction and ion exchange, and neutralizing a solution of tantalum oxide and/or niobium oxide in hydrofluoric acid with ammonia, aqueous ammonia, aqueous solution of ammonium carbonate, aqueous solution of ammonium hydrogencarbonate, hydrazine, or aqueous solution of hydrazine, to allow tantalum hydroxide and/or niobium hydroxide to precipitate.

A tantalum oxide and/or niobium oxide compound suitably used as a material in the production of ceramics compounds or electronics devices must generally have a purity of 99.8% or higher, preferably 99.9% or higher. Therefore, if a given tantalum and/or niobium material has a purity lower than the above desired level, the material should be purified to raise the level of purity.

If it is required to isolate tantalum and/or niobium from a compound whose content of tantalum and/or niobium is rather low, or to remove impurities from a coarsely purified tantalum and/or niobium compound, generally following methods may be employed.

(1) Solvent extraction using methylisobutyl ketone, tributyl phosphate, trioctylphosphine oxide, etc., or solvent that allows selective extraction;
(2) Differential crystallization enabling the selective crystallization of a target compound utilizing the difference of solubility to solvent among involved metal compounds;
(3) Ion exchange-based separation utilizing the selective adsorption of a target compound to the ion exchange resin; and
(4) Crystallization from a solution of a tantalum and/or niobium compound.

A solution of a tantalum and/or niobium compound purified by any one of the methods as described above, or a solution of fluorotantalic acid and/or fluoroniobic acid obtained by dissolving again highly purified tantalum oxide and/or niobium oxide in hydrofluoric acid may be subjected to following processes. It is possible to extract, by crystallization, only crystallized fluorotantalic acid and/or fluoroniobic acid from the solution, and use it as a material.

The above solution may contain, in addition to hydrofluoric acid, acid such as nitric acid, sulfuric acid or hydrochloric acid, or water or organic solvent.

Next, to the solution of a tantalum and/or niobium compound, solution of fluorotantalic acid and/or fluoroniobic acid, or solution obtained by dissolving crystallized fluorotantalic acid and/or fluoroniobic acid in water, is added a basic aqueous solution for neutralization, and thus tantalum hydroxide and/or niobium hydroxide is obtained.

The aqueous solution contains tantalum and/or niobium preferably at 1 to 150 g/L, particularly at 5 to 50 g/L in terms of the weight of tantalum and/or niobium. This is because, by adjusting the concentration of tantalum and/or niobium in the solution to such a low level, it becomes possible to lower the speed of neutralization, and thus to inhibit the rapid growth of crystals. During neutralization operation, the aqueous solution of a tantalum and/or niobium compound is preferably kept at 10 to 90°C, particularly 50 to 90°C.

Suitable basic aqueous solutions used for neutralization may include hydrazine, and aqueous solution of hydrazine.

The concentration of the basic aqueous solution should be restricted to a level as low as possible so that coarse expansion of particles represented by the growth of hydroxide particles can be minimized. Thus, the concentration in question is preferably kept at 1 to 50 wt%, particularly at 1 to 30 wt%. The temperature of the basic aqueous solution is preferably kept at a temperature as high as possible, because then it is possible to inhibit the coarse expansion of particles occurring in association with their growth. The temperature in question is preferably kept at 10 to 90°C, particularly at 50 to 90°C.

Neutralization operation may be achieved either by a method whereby a basic aqueous solution is added with stirring to an aqueous solution of a tantalum and/or niobium compound, or by a method whereby an aqueous solution of a tantalum and/or niobium compound is added with stirring to a basic aqueous solution. Neutralization of an aqueous solution of tantalum and/or niobium compound is preferably achieved by adding a basic solution until the pH of the resulting neutralized solution is pH9. The addition of a basic aqueous solution preferably occurs at a rate as low as possible, preferably at 0.5 to 5.0 reaction equivalents/hour.

Isolation of tantalum hydroxide and/or niobium hydroxide may be achieved by solid-liquid separation. Solid-liquid separation for separating solid tantalum hydroxide and/or niobium hydroxide from other solutes dissolved in the aqueous solution may be achieved by simple filtration, pressurized filtration, centrifugation/filtration, etc. Subsequent to filtration, tantalum hydroxide and/or niobium hydroxide is further purified by washing. The washing operation may be achieved either by allowing the solid tantalum and/or niobium hydroxide to disperse in a cleaning agent, or by contacting the solid tantalum and/or niobium hydroxide with a cleaning agent. For this operation, suitable cleaning agents may include water, preferably ion exchange water generally called purified water. Deliberate adjustment of the pH of the cleaning agent is not necessary. A publicly known method for reducing the amount of residual anions may be employed which consists of washing/treating the solid tantalum and/or niobium hydroxide with a mineral acid containing boron (boric acid) at 0.1 to 2 wt%.

Drying the tantalum hydroxide and/or niobium hydroxide thus obtained may be achieved by air blowing, warm heating, or vacuum drying. The temperature and duration of drying are not limited to any specific range. After drying, it is possible to obtain powdery tantalum hydroxide and/or niobium hydroxide comprising primary particles which have an average diameter of 0.001 to 1 µm and a specific surface area of 10 to 200 m²/g.

Then, tantalum hydroxide and/or niobium hydroxide thus dried is fired to produce tantalum oxide and/or niobium oxide. During this operation, the temperature for firing is preferably kept at 600 to 1100°C. This is because by so doing it is possible to remove a trace amount of residual fluorine element by evaporation.

The duration of firing is not limited to any specific range, as long as it is sufficiently long to allow tantalum hydroxide and/or niobium hydroxide to be oxidized satisfactorily. For example, firing is carried out for 3 to 24 hours. The atmosphere for firing is preferably pure oxygen because the object of firing is to oxidize tantalum hydroxide and/or niobium hydroxide. However, the air may be employed, as long as sufficient supply of oxygen is ensured. To remove a trace amount of residual fluorine element, a known method may be employed whereby firing is carried out under a flow of air containing water vapor.

The temperature rise during firing preferably occurs at a rate of 3 to 100°C/min, particularly 20 to 75°C/min. Of course the sample may be put into the crucible which is heated in advance to a specified temperature. The temperature rise during firing at a rate greater than 100°C/min is undesirable, because then the crucible might be damaged.

The tantalum oxide and/or niobium oxide obtained as above by firing tantalum hydroxide and/or niobium hydroxide contains Ta₂O₅ at 99.9 wt% or higher (in terms of the total weight minus the weight of Nb and transition metals), and/or Nb₂O₅ at 99.9 wt% or higher (in terms of the total weight minus the weight of Ta and transition metals), and will be used as a very suitable material in the fabrication of optical and electronic devices.

The powdery tantalum oxide and/or niobium oxide obtained subsequent to the firing step comprises primary particles which have an average diameter of 0.01 to 1.0 µm and specific surface area of 10.0 to 50.0 m²/g. Moreover, the powdery tantalum oxide and/or niobium oxide obtained as above takes the form of hollow particles, and thus, when added at a tiny amount to other materials, it can be readily mixed uniformly with those materials, and expected to confer a new functionality to the mixture. Accordingly, tantalum oxide and/or niobium oxide obtained according to the inventive method will serve as a suitable tantalum and/or niobium material in the fabrication of catalysts, optoelectronic devices, semiconductors and piezoelectric elements, and will further see wide applications.

### EXAMPLES

The present invention will be further illustrated with reference to representative examples. The below described examples are cited simply as an illustration of the present invention, and the invention is not limited in any way to those examples.

### EXAMPLE 1

To a clear, PFA-made vessel having 1 L volume and equipped with a stirrer, 98% pure niobium oxide 150 g (other impurities consisting of: Ta-30 ppm, K-10 ppm, Na-10 ppm, Ti-10 ppm, Fe-10 ppm, Ni-10 ppm, Al-10 ppm, Sb-ppm) and 50% HF 500 g were transferred, and the mixture was stirred at 90°C overnight. Small amounts of insoluble components were removed by filtration. To further remove the other impurities to thereby obtain highly pure niobium oxide, sulfuric acid and tributyl phosphate (TBP) were added for extraction. The mixture was allowed to divide into a lower aqueous phase and an upper TBP phase. To the lower aqueous phase was added water 1.5 kg (to 100 g/L in terms of the weight of niobium). To the solution, an aqueous solution of hydrazine (10.2 wt% in terms of the weight of hydrazine against the weight of the solution) obtained by dissolving a 85% aqueous solution of hydrazine monohydrate 750 g in water 5.5 kg was added dropwise at 90°C over 3 hours with stirring to precipitate niobium hydroxide which was then separated by filtration. The niobium hydroxide was allowed to disperse in water 5.0 kg, and subjected to repulp washing and filtration three times in succession.

By employing the same procedures (except that neutralization occurred at 0°C), tantalum hydroxide was obtained.

Niobium hydroxide or tantalum hydroxide thus washed was dried being kept at 115°C for 6 hours, and fired in the presence of air with an electric furnace for 8 hours: the temperature was allowed to rise at a rate of 10°C/min until 800°C was reached, and then the temperature maintained there.

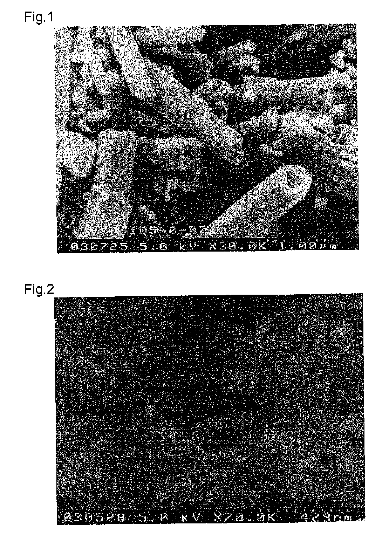

The fired product was inspected by XRD, and identified to be niobium oxide (Nb₂O₅) or tantalum oxide (Ta₂O₅). The contents of metal impurities contained in niobium oxide were: Ta (<10 ppm), K (<5 ppm), Na (<5 ppm), Ti (<1 ppm), Fe (<1 ppm), Ni (<1 ppm), Al (<1 ppm), and Sb (<1 ppm). The contents of metal impurities contained in tantalum oxide were: Nb (<10 ppm), K (<5 ppm), Na (<5 ppm), Ti (<1 ppm), Fe (<1 ppm), Ni (<1 ppm), Al (<1 ppm), and Sb (<1 ppm).
Photographs representing the surface condition of the samples are shown in Fig. 1 (niobium oxide) and Fig. 2 (tantalum oxide). From the SEM images, it is recognized that crystals take the form of hollow cylinders. It is further recognized that the two kinds of crystals consist of very fine primary particles having a high specific surface area: the average diameters of respective primary particles are 0.5 and 1 µm, their respective aspect ratios 5.2 and 8.9, and respective specific surface areas 19.8 and 10.2 g/m².

### EXAMPLE 2

To a clear, PFA-made vessel having 1 L volume and equipped with a stirrer, 99.9% pure tantalum oxide 100 g (other impurities consisting of: Nb-50 ppm, K-10 ppm, Na-10 ppm, Ti-10 ppm, Fe-10 ppm, Ni-10 ppm, Al-10 ppm, and Sb-ppm) and 50% HF 300 g were transferred, and the mixture was stirred at 90°C overnight. Small amounts of insoluble components were removed by filtration, and water 2.4 kg was added (to give 20 g/L in terms of the weight of tantalum). To the solution, an aqueous solution of hydrazine (10.6 wt% in terms of the weight of hydrazine against the weight of the solution) obtained by dissolving a 85% aqueous solution of hydrazine monohydrate 500 g in water 3.5 kg was added dropwise at 90°C over 2 hours with stirring to precipitate tantalum hydroxide which was then separated by filtration. The tantalum hydroxide was allowed to disperse in water 5.5 kg, and subjected to repulp washing and filtration three times in succession. Niobium hydroxide thus washed was dried being kept at 115°C for 8 hours, and fired in the presence of air with an electric furnace for 8 hours: the temperature was allowed to rise at a rate of 50°C/min until 1000°C was reached, and then the temperature maintained.

In the same manner, tantalum hydroxide obtained by adding dropwise 55 wt% hydrazine solution to 20 g/L tantalum solution was fired in the presence of air with an electric furnace for 6 hours: the temperature was allowed to rise at a rate of 1°C/min until 1000°C was reached, and then the temperature maintained there.

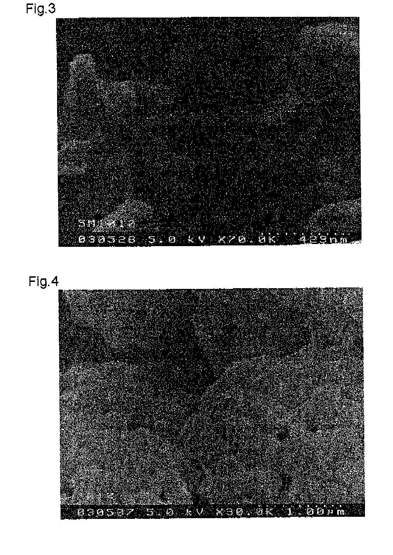

The fired product was inspected by XRD, and identified to be tantalum oxide (Ta₂O₅). The contents of metal impurities were: Nb (<10 ppm), K (<5 ppm), Na (<5 ppm), Ti (<1 ppm), Fe (<1 ppm), Ni (<1 ppm), Al (C1 ppm), and Sb (<1 ppm). A photographs representing the surface condition of the sample is shown in Fig. 3. From the SEM image of shown in Fig. 3, it is recognized that the surface consists of crystals in the form of hollow cylinders. It is further recognized that the crystals consist of very fine primary particles having a high specific surface area: the average diameter of primary particles is 0.6 µm, and their specific surface area is 18.5 g/m².

### EXAMPLE 3

To a clear, PFA-made vessel having 1 L volume and equipped with a stirrer, 99.9% pure niobium oxide 100 g (other impurities consisting of: Ta-30 ppm, K-10 ppm, Na-10 ppm, Ti-10 ppm, Fe-10 ppm, Ni-10 ppm, A1-10 ppm, and Sb-ppm) and 50% HF 300 g were transferred, and the mixture was stirred at 80°C for 6 hours. Small amounts of insoluble components were further removed by filtration (to give 250 g/L in terms of the weight of niobium). To the solution, an aqueous solution of ammonia (6.0 wt% in terms of the weight of ammnonia against the weight of the solution) obtained by dissolving a 28% aqueous solution of ammonia 1500 g in water 5.5 kg was added dropwise at 90°C over 2 hours with stirring to precipitate niobium hydroxide which was then separated by filtration. The niobium hydroxide was allowed to disperse in water 3.5 kg, and subjected to repulp washing and filtration three times in succession. After washing the niobium hydroxide sample was dried being kept at 115°C for 8 hours, and fired for 8 hours in the presence of air with an electric furnace: the temperature was allowed to rise at a rate of 50°C/min until 750°C was reached, and then the temperature maintained there. The fired product was inspected by XRD, and identified to be niobium oxide (Nb₂O₅). The contents of metal impurities were: Ta (<10 ppm), K (<5 ppm), Na (<5 ppm), Ti (<1 ppm), Fe (<1 ppm), Ni (<1 ppm), Al (<1 ppm), and Sb (<1 ppm).
A photograph representing the surface condition of the sample is shown in Fig. 4. From the SEM image, it is recognized that primary particles fuse together as a result of firing to become conglomerate clusters. It is further recognized that the crystals consist of primary particles having a diameter and specific surface area similar to those of the corresponding particles conventionally used for the fabrication of optical devices: the average diameter of the primary particles is 4.8 µm and specific surface areas 0.8 g/m².

The product of each Example is evaluated based on following data (1) to (5).
(1) Analysis of crystal structure: evaluation was based on data from an X-ray diffraction device (XRD).
(2) Amounts of metal impurities: evaluation was based on data of induction-coupled plasma atomic emission spectroscopic analysis.
(3) Photograph representing surface condition: evaluation was based on SEM photography.
(4) Average diameter of primary particles: evaluation was based on data provided by a particle size distribution meter (laser diffraction/scattering method).
(5) Specific surface area: evaluation was based on fluidity BET single point method.

Tantalum oxide in the form of hollow particles obtained as in Example was added to foundation. It disperses more readily in the foundation than does conventional tantalum oxide in the form of solid particles.

### INDUSTRIAL APPLICABILITY

According to the inventive method, it is possible to obtain tantalum oxide and/or niobium oxide in the form of hollow particles. It is also possible to obtain powdery tantalum oxide and/or niobium oxide comprising primary particles which have an average diameter equal to or less than 1 µm, and a specific surface area equal to or more than 10 m²/g.
It may be expected that tantalum oxide and/or niobium oxide in the form of hollow particles which is readily produced by the inventive method, when used as a material in the fabrication of piezoelectric elements, semiconductors, sensors, optoelectronic devices, dielectric elements, or superconductive elements, would confer a novel functionality to those products that has never been observed heretofore.

## Claims

1. A method for producing tantalum oxide and/or niobium oxide in the form of hollow particles, the method comprising adding hydrazine or an aqueous solution of hydrazine to (1) an aqueous solution of a tantalum compound and/or a niobium compound, to (2) an aqueous solution of fluorotantalic acid and/or fluoroniobic acid, or to (3) a solution obtained by dissolving crystallized fluorotantalic acid and/or crystallized fluoroniobic acid in water, to produce tantalum hydroxide and/or niobium hydroxide, and firing the tantalum hydroxide and/or niobium hydroxide.

2. The method according to Claim 1 wherein the concentration of tantalum and/or niobium in the aqueous solution is 1 to 150 g/L in terms of the weight of tantalum and/or niobium.

3. The method according to Claim 1 or 2 wherein the concentration of hydrazine is 1 to 50 wt%.

4. The method according to any one of Claims 1 to 3 wherein the concentration of hydrazine is 1 to 30 wt%.

5. The method according to any one of Claims 1 to 4 wherein the temperature of the aqueous solution of hydrazine is 0 to 90°C.

6. The method according to any one of Claims 1 to 5 wherein the temperature of the aqueous solution of hydrazine is 50 to 90°C.

7. The method according to any one of Claims 1 to 6 wherein the rate of temperature rise during firing is 3 to 100°C/minute.

8. The method according to any one of Claims 1 to 7 wherein the rate of temperature rise during firing is 20 to 75°c/minute.

9. Tantalum oxide and/or niobium oxide in the form of hollow particles produced by the method according to any one of Claims 1 to 8.

10. A method for producing tantalum oxide and/or niobium oxide in the form of hollow particles as described in Claim 9 wherein the particles have a hollow shape.

11. Tantalum oxide and/or niobium oxide according to Claim 9 or 10 wherein the particles have an aspect ratio (ratio of length/diameter) of 1.0 to 10.

12. Tantalum oxide and/or niobium oxide in the form of hollow particles according to any one of Claims 9 to 11 comprising primary particles whose average diameter is 0.01 to 1.0 µm.

13. Tantalum oxide and/or niobium oxide in the form of hollow particles wherein the particles have a hollow shape.
